# FASCICULE DE BREVET EUROPEEN

(11) **EP 2 737 238 B1**
(45) Date de publication et mention de la délivrance du brevet: **13.03.2019**
(21) Numéro de dépôt: 12734959.5
(22) Date de dépôt: 12.06.2012
(51) Int. Cl.: F16L 11/12, E21B 17/20

(54) **CONDUITE FLEXIBLE AVEC TUBE D'INJECTION ET PROCEDE DE TRANSPORT D'UN EFFLUENT PETROLIER**
FLEXIBLES ROHR MIT INJEKTIONSSCHLAUCH UND VERFAHREN ZUM TRANSPORT VON ERDÖLAUSFLUSS
FLEXIBLE PIPE WITH INJECTION TUBE AND METHOD FOR TRANSPORTING A PETROLEUM EFFLUENT

(30) Priorité: 29.07.2011 FR 1102382
(43) Date de publication de la demande: 04.06.2014
(73) Titulaire: IFP Energies nouvelles, 92500 Rueil-Malmaison (FR); Technip France, 92400 Courbevoie (FR)
(72) Inventeur: AVERBUCH, Daniel, F-69390 Vernaison (FR)
(74) Mandataire: IFP Energies nouvelles
(86) Numéro de dépôt international: PCT/FR2012/000239
(87) Numéro de publication internationale: WO 2013/017742

(56) Documents cités:
- FR-A1- 2 858 841
- FR-A1- 2 919 015
- US-B1- 7 669 659

## Description

La présente invention concerne le domaine des conduites flexibles.

Les conduites flexibles sont notamment utilisées par l'industrie pétrolière pour convoyer le pétrole d'une tête de puits implantée au fond de la mer à une installation de traitement située à la surface de la mer. Les conduites installées au fond de la mer, couramment appelées "flow line", subissent principalement des contraintes mécaniques statiques. Par contre, les conduites reliant le fond de la mer à la surface, couramment appelées "riser", sont sollicitées mécaniquement de manière statique et dynamique.

Dans la présente description le terme fil désigne des éléments allongés dont une dimension est très grande par rapport aux autres.

La structure d'une conduite flexible, notamment décrite dans les normes API 17 B et API 17 J établies par l'American Petroleum Institute sous l'intitulé "Recommended Practice for Flexible Pipe", se présente généralement sous la forme d'un tube composé de nappes de fils de renfort assurant la résistance mécanique et de gaines en polymère assurant l'étanchéité.

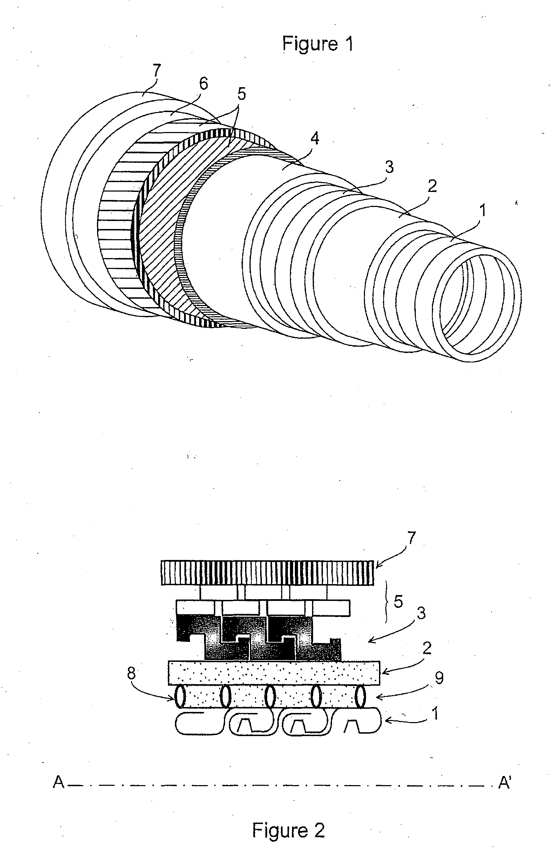

Un exemple de structure de conduite flexible représentée par la figure 1 est constituée de plusieurs couches ou nappes décrites ci-après de l'intérieur vers l'extérieur de la conduite.

La carcasse 1 est constituée d'une bande métallique enroulée selon une hélice à pas court, et destinée à la résistance à l'écrasement sous l'effet de la pression externe appliquée à la conduite. La bande métallique peut être réalisée à partir d'un feuillard ou d'un fil, chaque spire étant agrafée aux spires adjacentes.

La gaine d'étanchéité 2 est réalisée par extrusion autour de la carcasse d'un matériau polymère, en général choisi parmi les polyoléfines, les polyamides et les polymères fluorés.

La voûte 3 réalisée en fils métalliques agrafés ou emboîtables assure la résistance à la pression interne dans la conduite.

Eventuellement, une deuxième gaine d'étanchéité 4 en matériau polymère est extrudée autour de la voûte 3.

Les nappes d'armures de traction 5 sont constituées par des fils métalliques enroulés en hélice selon des angles compris entre 20° et 55°. Les nappes peuvent être maintenues par le ruban 6.

La gaine en polymère 7 forme une protection externe de la conduite flexible.

La production de fluides pétroliers dans des canalisations flexibles ou rigides peut nécessiter l'injection de produits chimiques dans le fluide de production, soit à des fins de prévention soit de remédiation vis-à-vis des problématiques de maintien de la veine fluide ou de tenue des conduites.

Les demandes de brevet FR 2858841 et FR 2919015 décrivent de telles conduites flexibles équipées de moyens complémentaires de circulation d'un fluide.

Ainsi, on peut être amené à injecter des additifs anticorrosion dans le fluide de production pour limiter les effets de la corrosion des fluides transportés sur la tenue des métaux constitutifs de la conduite. Divers additifs sont utilisés, avec des compositions variables selon les fluides transportés et métaux utilisés.

Dans une autre optique, des additifs peuvent être utilisés pour limiter les problématiques de maintien de la veine fluide dans la conduite et notamment les problématiques de formation d'hydrates de gaz.

Les hydrates de gaz se forment en présence de certains gaz comme le méthane et l'eau, dans certaines conditions thermodynamiques de pression et de température. On définit ainsi un domaine de stabilité thermodynamique dans le plan considéré, qui indique la zone où les hydrates pourront se former. Ces conditions peuvent être rencontrées lorsque la pression est forte et la température basse, ce qui peut survenir notamment au cours des phases d'arrêt de production.

De plus, des conditions cinétiques définissent la vitesse d'apparition des hydrates, celles-ci dépendant de manière très complexe de la physico-chimie des fluides en place, ainsi que des régimes d'écoulement.

De façon préventive, on peut employer divers additifs pour limiter ou éviter la formation d'hydrates. Ainsi, on connaît par exemple les additifs dits thermodynamiques, souvent à base d'alcool, comme l'éthanol, ou le Mono Ethanol Glycol dont la présence déplace les conditions d'apparition des hydrates de gaz, dans le domaine de pression et de température. Des additifs dits "cinétiques" existent également et jouent sur les capacités d'agglomération des particules d'hydrates, celles-ci pouvant en présence de ces additifs être transportées sans prendre en masse et créer de bouchons, grâce à des propriétés tensio-actives.

Les situations critiques sont obtenues lors des arrêts de production. Dans ce cas, une procédure classique est le remplacement de l'huile de production par une huile morte, couramment nommée "dead oil displacement", ce qui implique une architecture de conduites en boucle, et éventuellement une durée d'opérations relativement longue.

Dans les cas où des conduites ou des organes de contrôle comme les distributeurs, couramment nommés "manifolds", sont pris dans des bouchons d'hydrates, on peut être amené à déplacer un navire pour mener des opérations de reconditionnement couramment nommées "work-over", notamment au moyen de conduites rigides déroulées également nommées "coiled tubing". Alternativement, il est envisagé de disposer de moyens de chauffage du fluide de production, par chauffage distribué le long des conduites pour pouvoir agir, de manière préventive ou curative.

L'injection d'additifs peut également être envisagée de manière curative, éventuellement associée à une dépressurisation de la conduite ou à un chauffage.

Il y a un donc, dans plusieurs situations, un intérêt à pouvoir injecter divers fluides dans la veine de production des conduites flexibles. Cependant, ceci nécessite dans la pratique actuelle d'injecter en des points bien précis, qui sont typiquement les moyens collecteurs et distributeurs couramment nommés "manifolds" présents sur les conduites ou les têtes de puits. Alternativement, on peut injecter des produits par un "coiled tubing" dans une conduite flexible, mais à une distance limitée de la surface, et donc sur une portion limitée de la conduite flexible.

Le principe de l'invention consiste à réaliser une architecture de conduite flexible permettant l'injection directe de fluide à l'intérieur de la conduite, en un ou plusieurs points de la conduite.

Pour ce faire, on dispose un ou plusieurs tubes métalliques, situés entre la carcasse et la gaine d'étanchéité, qui débouchent en un ou plusieurs points de la conduite.

De manière générale, la présente invention a pour objet une conduite flexible comportant, de l'intérieur vers l'extérieur, une carcasse, une gaine d'étanchéité en matériau polymère et une voûte de pression disposée au-dessus de la gaine d'étanchéité, la carcasse étant composée d'au moins un élément métallique enroulé selon une hélice. L'invention est caractérisée en ce qu'au moins un tuyau est disposé dans un espace annulaire séparant la carcasse de la gaine d'étanchéité, le tuyau comportant un orifice d'injection situé à l'une des deux extrémités de la conduite et un orifice d'évacuation débouchant entre les deux extrémités de la conduite.

Selon l'invention, la conduite flexible peut comporter au moins deux tuyaux disposés dans l'espace annulaire, les orifices d'évacuation des tuyaux débouchant à différentes positions entre les deux extrémités de la conduite.

Ledit au moins un tuyau peut être enroulé selon une hélice.

Ledit au moins un tuyau peut être enroulé selon une succession d'au moins un premier segment d'hélice et un deuxième segment d'hélice, l'angle d'enroulement de l'hélice du premier segment étant opposé à l'angle d'enroulement de l'hélice du deuxième segment.

L'angle d'enroulement de l'hélice peut être compris, en valeur absolue, entre 5° et 25° par rapport à l'axe de la conduite.

Un élément allongé peut être disposé entre la carcasse et la gaine d'étanchéité, l'élément allongé étant juxtaposé audit au moins un tuyau.

Ledit au moins un tuyau peut être composé d'un matériau métallique choisi parmi un acier inox ou un acier duplex.

La conduite flexible peut comporter, en outre, au moins une nappe d'armure de traction et une gaine de protection en matériau polymère.

L'invention concerne également un procédé de transport d'un effluent pétrolier par circulation dans une conduite flexible selon l'invention, caractérisé en ce qu'on injecte un fluide dans l'orifice d'injection dudit au moins un tuyau.

Le fluide peut comporter des composés anticorrosion, des composés anti-hydrates, des composés anti-asphaltène.

D'autres caractéristiques et avantages de l'invention seront mieux compris et apparaîtront clairement à la lecture de la description faite ci-après en se référant aux dessins parmi lesquels :
- la figure 2 représente en détail un mode de réalisation d'une conduite flexible avec un tuyau d'injection selon l'invention,
- les figures 3 à 6 représentent différent mode d'enroulement de tuyaux d'injection,
- la figure 7 représente une conduite selon l'invention munie de trois tuyaux d'injection,
- les figures 8 et 9 représentent deux mises en oeuvre d'une conduite flexible selon l'invention.

La figure 1 représente une conduite flexible selon l'art antérieur.

La figure 2 schématise une vue en coupe selon l'axe AA' d'une conduite flexible. La conduite comporte, de l'intérieur vers l'extérieur, une carcasse 1, une gaine d'étanchéité 2, une voûte 3, des nappes d'armure 5 et une gaine de protection 7 similaire à celles décrites en référence à la figure 1. Selon l'invention, la conduite comporte, en outre, une nappe 9 comportant un ou plusieurs tuyaux 8 disposés, par exemple en étant enroulés selon une hélice, dans l'espace annulaire situé entre la carcasse 1 et la gaine d'étanchéité 3. Le tuyau 8 s'étend le long de la conduite en débouchant, par exemple au moyen d'une valve, à un point situé entre les extrémités de la conduite. Par exemple le tuyau débouche à un point situé à une position axiale située à une distance comptée par rapport à l'extrémité de la conduite, ladite distance étant comprise entre 1% et 99%, de préférence entre 10% et 90% de la longueur de la conduite. Le tuyau 8 permet d'injecter un fluide, par exemple un fluide anti-hydrate par exemple un alcool ou un glycol, un gaz, des additifs anticorrosion, des additifs anti-asphaltène, depuis une extrémité de la conduite jusqu'au point au milieu de la conduite où débouche le tuyau 8. Ainsi, la présente invention permet d'injecter un fluide directement à l'intérieur de la conduite, en différents points de la conduite.

Le tuyau 8 est réalisé de préférence en des matériaux résistants à la corrosion due aux fluides circulant dans la conduite, ainsi qu'aux fluides transportés dans le tuyau 8. Ces matériaux peuvent être un acier inoxydable par exemple de grade 304 ou 316, ou un acier duplex, par exemple la nuance EN 1.4016 (AISI 430).

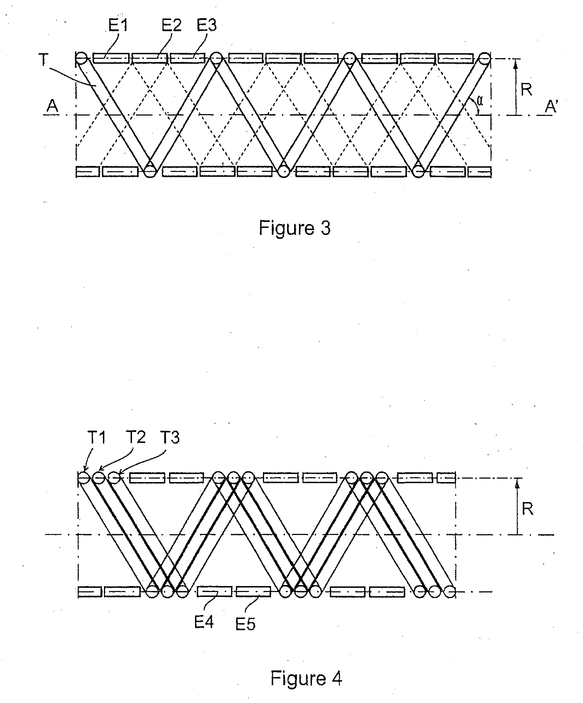

Les figures 3 à 6 proposent quatre exemples de réalisation de la nappe 9 de la conduite flexible décrite en référence à la figure 2.

La figure 3 représente un enroulement d'un tuyau T en hélices dans une conduite flexible selon l'invention. Le tuyau est enroulé selon une hélice de rayon R et d'angle α qui peut être compris entre 5° et 25°, de préférence entre 7° et 20°, une excellente valeur de l'angle α de l'hélice étant comprise entre 7° et 15°. Les autres nappes de la conduite flexible ne sont pas représentées pour faciliter la lecture de la figure 3. La nappe formée par l'enroulement du tuyau T comporte en outre trois éléments allongés E1, E2 et E3 juxtaposés, par exemple des fils de section rectangulaire, en matière polymère ou métallique. Les éléments E1, E2 et E3 sont enroulés selon une hélice de même rayon R et de même angle par rapport à l'axe AA' que l'enroulement du tuyau T. Pour faciliter la lecture de la figure 3, seul l'enroulement de l'élément E2 est représenté en traits pointillés. Ces éléments E1, E2 et E3 permettent de remplir l'espace annulaire entre deux spires adjacentes de l'enroulement du tuyau T et d'éviter que la gaine d'étanchéité s'affaisse entre deux spires de l'enroulement du tuyau T.

La figure 4 représente une portion de conduite selon l'invention comportant trois tuyaux d'injection T1, T2 et T3 disposés selon trois hélices adjacentes inscrites dans un même rayon R et ayant le même angle d'enroulement par rapport à l'axe AA' de la conduite flexible. L'espace annulaire entre les tuyaux est comblé par les éléments allongés E4 et E5. Pour faciliter la lecture de la figure 4, les enroulements des éléments E4 et E5 ne sont pas représentés. En référence à la figure 4, les tuyaux T1, T2 et T3 sont adjacents, puis les éléments E4 et E5 sont disposés à la suite des trois tuyaux. Alternativement, chacun des éléments E4 et E5 peut être intercalé entre deux des tuyaux T1, T2 et T3.

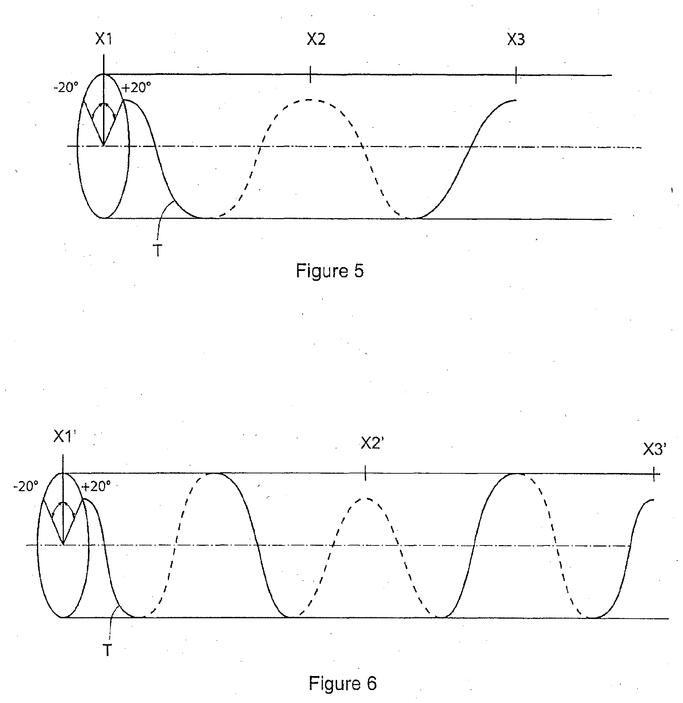

Les figures 5 et 6 représentent un tuyau T enroulé selon des segments en hélice avec inversion de l'angle d'hélice du type "S-Z". Les enroulements de type "S-Z" sont notamment décrits dans le document API 17E. L'enroulement de type "S-Z" comporte une succession de motifs d'enroulement identiques se répétant avec périodicité et comportant chacun des segments enroulés en hélice avec un angle d'hélice constant dans un sens positif et des segments enroulés en hélice avec un angle d'hélice constant dans le sens négatif. Des segments d'inversion de sens d'enroulement assurent la variation progressive de l'angle d'enroulement entre les segments d'angle d'hélice constant. L'enroulement de type "S-Z" est avantageux car les machines pour le réaliser sont plus simples que celles utilisées pour l'enroulement en hélice à pas constant. En référence à la figure 5, entre les points d'inversion de sens d'enroulement, de positions axiales X1 et X2, on enroule le tuyau T dans un sens sur une course angulaire égale à 320°. Puis entre les positions axiales X2 et X3, on enroule le tuyau T en sens inverse sur la même course angulaire. La valeur absolue de l'angle d'enroulement du segment d'hélice entre X1 et X2 et du segment d'hélice entre X2 et X3 peut être comprise entre 5° et 25°, de préférence entre 7° et 20°, une excellente valeur absolue de l'angle étant comprise entre 7° et 15°. En référence à la figure 6, on enroule le tuyau T selon un segment d'hélice faisant un tour et demi entre les points d'inversion de sens de position axiale X1' et X2'. Puis on enroule le tuyau T selon un deuxième segment d'hélice faisant un tour et demi entre les points d'inversion de sens de position axiale X2' et X3'.

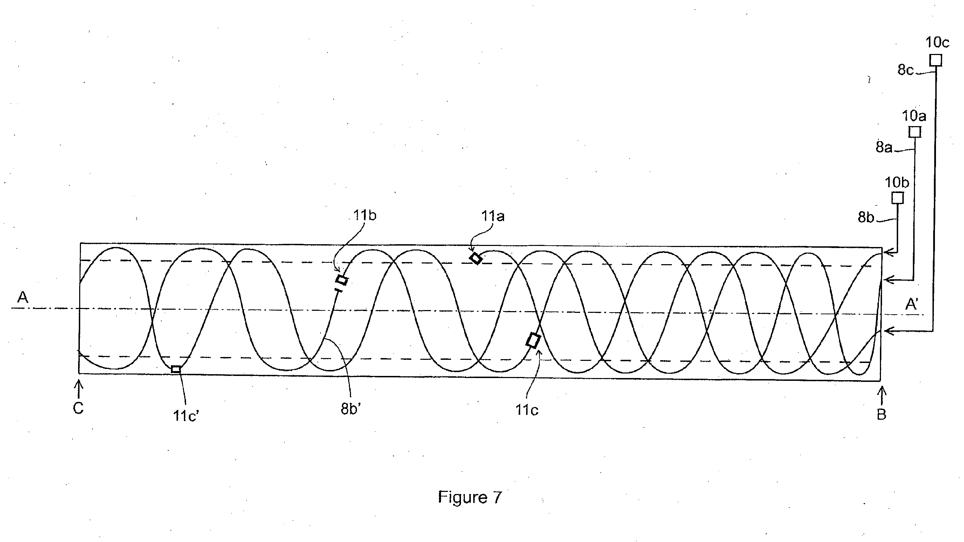

La figure 7 représente une conduite flexible d'axe AA' munie de trois tuyaux d'injection 8a, 8b et 8c pour illustrer la possibilité d'injecter un fluide à différentes positions axiales dans la conduite selon l'invention. Pour faciliter la lecture, les autres éléments constitutifs de la conduite flexible ne sont pas représentés sur la figure 5. Chacun des tuyaux 8a, 8b et 8c comporte respectivement une connexion 10a, 10b et 10c située à l'extrémité B de la conduite flexible.

Le tuyau 8a s'étend depuis la connexion 10a jusqu'à la valve 11a qui débouche environ au milieu de la longueur de la conduite. Le tuyau 8a permet d'injecter un fluide depuis l'extrémité B dans l'intérieur de la conduite au niveau de la valve 11a.

Le tuyau 8b s'étend depuis la connexion 10b jusqu'à la valve 11b qui débouche environ aux trois-quarts de la longueur de la conduite. Après la valve 11b, un élément allongé 8b', par exemple un deuxième tuyau ou un fil de renfort, s'étend dans la prolongation du tuyau 8b jusqu'à l'autre extrémité. L'élément 8b' est enroulé selon la même hélice que le tuyau 8b entre la carcasse et la gaine d'étanchéité. Le tuyau 8b permet d'injecter un fluide depuis l'extrémité B dans l'intérieur de la conduite au niveau de la valve 11b.

Le tuyau 8c s'étend depuis l'extrémité B jusqu'à l'extrémité C de la conduite flexible. Le tuyau 8c est muni à l'extrémité B d'une connexion 10c, d'une valve 11c située à environ la moitié de la longueur de la conduite et d'une valve 11c' située à environ quatre-cinquièmes de la longueur de la conduite. Le tuyau 8c permet d'injecter un fluide depuis l'extrémité B, jusque dans l'intérieur de la conduite au niveau des valves 11c et 11c'.

De préférence, la position axiale des valves 11a, 11b, 11c et 11c' est distante de l'extrémité B d'une distance comprise entre 1% et 99%, de préférence entre 10% et 90%, de la longueur de la conduite mesurée entre les extrémités B et C.

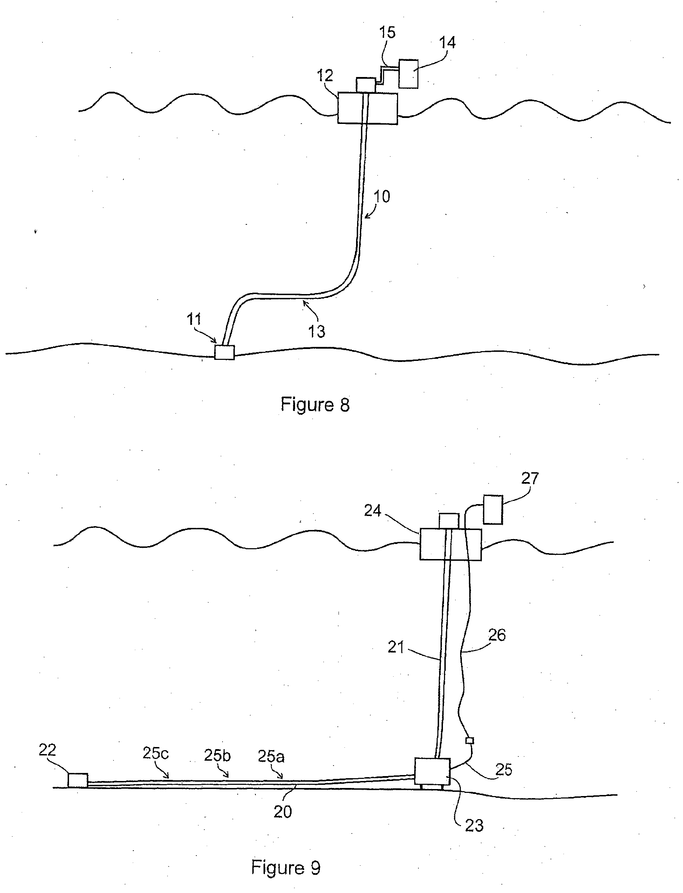

La figure 8 représente une conduite flexible 10 connectée à la tête de puits 11 située sur le fond marin. La conduite 10 relie la tête de puits 11 au support flottant 12 situé à la surface de la mer. La conduite flexible 10, couramment nommée "riser" permet de transporter l'effluent pétrolier issu de la tête de puits 11 jusqu'au support flottant 12. La conduite 10 est composée d'une architecture selon l'invention, c'est-à-dire qu'elle comporte au moins un tuyau 15 qui s'étend depuis l'extrémité située sur le support flottant 12 jusqu'à une position située entre la tête de puits 11 et le support flottant 12. Par exemple le tuyau 15 débouche au niveau du point bas 13 où des hydrates sont susceptibles de se former en premier. Un système de pompage permet d'alimenter le tuyau 15 en fluide à injecter au niveau du support flottant 12.

La figure 9 représente une conduite flexible 20 de type "flow line" qui relie la tête de puits 22 sous-marine à une station de pompage 23. La station de pompage 23 est reliée au support flottant 24 par la conduite flexible 21 de type "riser". Les conduites 20 et 21 sont assemblées bout-à-bout au niveau de la station de pompage 24 pour transporter l'effluent pétrolier issu de la tête de puits 22 jusqu'au support flottant 24. La conduite 20 est réalisée selon l'invention, c'est-à-dire qu'elle comporte un ou plusieurs tuyaux 25 qui s'étendent depuis la station de pompage 23 et qui débouchent en un ou plusieurs points situés entre la station de pompage 23 et la tête de puits 22. Par exemple, le tuyau 25 débouche au niveau des positions 25a, 25b et 25c. Le tuyau 25 est connecté au dispositif de pompage 27, situé sur la plateforme 24, par l'intermédiaire du conduit 26 qui s'étend entre la plate forme 24 et la station 23. Ainsi, le fluide à injecter est pompé par le dispositif 27, transporté dans le conduit 26 et le tuyau 25 pour être distribué à l'intérieur de la conduite flexible 20 au niveau des points d'injection 25a, 25b et 25c.

## Revendications

1. Conduite flexible comportant, de l'intérieur vers l'extérieur, une carcasse (1), une gaine d'étanchéité (2) en matériau polymère et une voûte de pression (3) disposée au-dessus de la gaine d'étanchéité, la carcasse (1) étant composée d'au moins un élément métallique enroulé selon une hélice, **caractérisée en ce qu'**au moins un tuyau (8; 8a; 8b; 8c) est disposé dans un espace annulaire séparant la carcasse (1) de la gaine d'étanchéité (2), le tuyau (8; 8a; 8b; 8c;) comportant un orifice d'injection (10a; 10b; 10c) situé à l'une des deux extrémités de la conduite et un orifice d'évacuation (11a; 11b; 11c; 11c') débouchant entre les deux extrémités de la conduite.

2. Conduite flexible selon la revendication 1, **caractérisée en ce qu'**elle comporte au moins deux tuyaux (8; 8a; 8b; 8c) disposés dans l'espace annulaire, les orifices d'évacuation (11a; 11b; 11c; 11c') des tuyaux débouchant à différentes positions entre les deux extrémités de la conduite.

3. Conduite selon l'une des revendications 1 et 2, **caractérisée en ce que** ledit au moins un tuyau (8; 8a; 8b; 8c) est enroulé selon une hélice.

4. Conduite selon l'une des revendications 1 et 2, **caractérisée en ce que** ledit au moins un tuyau (8; 8a; 8b; 8c) est enroulé selon une succession d'au moins un premier segment d'hélice et un deuxième segment d'hélice, l'angle d'enroulement de l'hélice du premier segment étant opposé à l'angle d'enroulement de l'hélice du deuxième segment.

5. Conduite flexible selon l'une des revendications 3 et 4, **caractérisée en ce que** l'angle d'enroulement de l'hélice est compris, en valeur absolue, entre 5° et 25° par rapport à l'axe de la conduite.

6. Conduite flexible selon l'une des revendications précédentes, **caractérisée en ce qu'**un élément allongé (E1; E2; E3; E4; E5) est disposé entre la carcasse (1) et la gaine d'étanchéité (2), l'élément allongé étant juxtaposé audit au moins un tuyau (8; 8a; 8b; 8c).

7. Conduite flexible selon l'une des revendications précédentes, **caractérisée en ce que** ledit au moins un tuyau (8; 8a; 8b; 8c) est composé d'un matériau métallique choisi parmi un acier inox ou un acier duplex.

8. Conduite flexible selon l'une des revendications précédentes, comportant au moins une nappe d'armure (5) de traction et une gaine de protection en matériau polymère (7).

9. Procédé de transport d'un effluent pétrolier par circulation dans une conduite flexible selon l'une des revendications précédentes, **caractérisé en ce qu'**on injecte un fluide dans l'orifice d'injection dudit au moins un tuyau (8; 8a; 8b; 8c).

10. Procédé selon la revendication 9, **caractérisé en ce que** le fluide comporte des composés anticorrosion, des composés anti-hydrates, des composés anti-asphaltène.

## Patentansprüche

1. Flexible Leitung, umfassend, von innen nach außen, eine Karkasse (1), eine Dichtungshülle (2) aus Polymermaterial und eine Druckkalotte (3), die über der Dichtungshülle angeordnet ist, wobei die Karkasse (1) aus mindestens einem Metallelement besteht, das als Helix aufgerollt ist, **dadurch gekennzeichnet, dass** mindestens ein Rohr (8; 8a; 8b; 8c) in einem ringförmigen Raum angeordnet ist, der die Karkasse (1) von der Dichtungshülle (2) trennt, wobei das Rohr (8; 8a; 8b; 8c) eine Einspritzöffnung (10a; 10b; 10c), die an einem der beiden Enden der Leitung angeordnet ist, und eine Abfuhröffnung (11a; 11b; 11c; 11c'), die zwischen den beiden Enden der Leitung einmündet, umfasst.

2. Flexible Leitung nach Anspruch 1, **dadurch gekennzeichnet, dass** diese mindestens zwei Rohre (8; 8a; 8b; 8c) umfasst, die in dem ringförmigen Raum angeordnet sind, wobei die Abfuhröffnungen (11a; 11b; 11c; 11c') der Rohre an verschiedenen Positionen zwischen den beiden Enden der Leitung einmünden.

3. Leitung nach einem der Ansprüche 1 und 2, **dadurch gekennzeichnet, dass** das mindestens eine Rohr (8; 8a; 8b; 8c) als Helix aufgerollt ist.

4. Leitung nach einem der Ansprüche 1 und 2, **dadurch gekennzeichnet, dass** das mindestens eine Rohr (8; 8a; 8b; 8c) in einer Abfolge mindestens eines ersten Helixsegments und eines zweiten Helixsegments aufgerollt ist, wobei der Umschlingungswinkel der Helix des ersten Segments zu dem Umschlingungswinkel der Helix des zweiten Segments entgegengesetzt ist.

5. Flexible Leitung nach einem der Ansprüche 3 und 4, **dadurch gekennzeichnet, dass** der Umschlingungswinkel der Helix als Absolutwert zwischen 5° und 25° in Bezug auf die Achse der Leitung beträgt.

6. Flexible Leitung nach einem der vorhergehenden Ansprüche, **dadurch gekennzeichnet, dass** ein längliches Element (E1; E2; E3; E4; E5) zwischen der Karkasse (1) und der Dichtungshülle (2) angeordnet ist, wobei das längliche Element neben dem mindestens einen Rohr (8; 8a; 8b; 8c) angeordnet ist.

7. Flexible Leitung nach einem der vorhergehenden Ansprüche, **dadurch gekennzeichnet, dass** das mindestens eine Rohr (8; 8a; 8b; 8c) aus einem Metallmaterial besteht, das aus rostfreiem Stahl oder einem Duplexstahl ausgewählt ist.

8. Flexible Leitung nach einem der vorhergehenden Ansprüche, umfassend mindestens einen Zugbewehrungsmantel (5) und eine Schutzhülle aus Polymermaterial (7).

9. Verfahren zum Transport eines Erdölabstroms durch Zirkulation in einer flexiblen Leitung nach einem der vorhergehenden Ansprüche, **dadurch gekennzeichnet, dass** ein Fluid in die Einspritzöffnung des mindestens einen Rohrs (8; 8a; 8b; 8c) eingespritzt wird.

10. Verfahren nach Anspruch 9, **dadurch gekennzeichnet, dass** das Fluid Anti-Korrosionsverbindungen, Anti-Hydratationsverbindungen, Anti-Asphaltenverbindungen umfasst.

## Claims

1. A flexible pipe comprising, from inside to outside, a carcass (1), a polymer sealing sheath (2) and a pressure vault (3) arranged above the sealing sheath, carcass (1) consisting of at least one helically wound metallic element, **characterized in that** at least one hose (8; 8a; 8b; 8c) is arranged in an annular space that separates carcass (1) from sealing sheath (2), hose (8; 8a; 8b; 8c) comprising an injection orifice (10a; 10b; 10c) at one of the two ends of the pipe and a discharge orifice (11a; 11b; 11c; 11c') opening between the two ends of the pipe.

2. A flexible pipe as claimed in claim 1, **characterized in that** it comprises at least two hoses (8; 8a; 8b; 8c) arranged in the annular space, discharge orifices (11a; 11b; 11c; 11c') of the hoses opening onto different positions between the two ends of the pipe.

3. A flexible pipe as claimed in any one of claims 1 and 2, **characterized in that** said at least one hose (8; 8a; 8b; 8c) is helically wound.

4. A flexible pipe as claimed in any one of claims 1 and 2, **characterized in that** said at least one hose (8; 8a; 8b; 8c) is wound in a succession of at least a first helical segment and a second helical segment, the winding angle of the helix of the first segment being opposite to the winding angle of the helix of the second segment.

5. A flexible pipe as claimed in any one of claims 3 and 4, **characterized in that** the winding angle of the helix ranges, in absolute value, between 5° and 25° with respect to the axis of the pipe.

6. A flexible pipe as claimed in any one of the previous claims, **characterized in that** an elongate element (E1; E2; E3; E4; E5) is arranged between carcass (1) and sealing sheath (2), the elongate element being juxtaposed with said at least one hose (8; 8a; 8b; 8c).

7. A flexible pipe as claimed in any one of the previous claims, **characterized in that** said at least one hose (8; 8a; 8b; 8c) is made of a metallic material selected from among a stainless steel or a duplex steel.

8. A flexible pipe as claimed in any one of the previous claims, comprising at least one tensile armour ply (5) and a polymer protective sheath (7).

9. A method of transporting a petroleum effluent by circulation in a flexible pipe as claimed in any one of the previous claims, **characterized in that** a fluid is injected into the injection orifice of said at least one hose (8; 8a; 8b; 8c).

10. A method as claimed in claim 9, **characterized in that** the fluid comprises anticorrosion compounds, antihydrate compounds and anti-asphaltene compounds.
